# EUROPEAN PATENT APPLICATION

(11) **EP 4 746 361 A1**
(43) Date of publication of application: **20.05.2026**
(21) Application number: 24853121.2
(22) Date of filing: 17.01.2024
(51) Int. Cl.: H04L 41/06

(54) **FAULT DETECTION METHOD, SYSTEM AND APPARATUS, AND STORAGE MEDIUM**

(30) Priority: 11.08.2023 CN 202311018430
(71) Applicant: Huawei Technologies Co., Ltd., Shenzhen, Guangdong 518129 (CN)
(72) Inventor: TAN, Xiaobing, Shenzhen, Guangdong 518129 (CN); LIU, Yuliang, Shenzhen, Guangdong 518129 (CN); LI, Lunchen, Shenzhen, Guangdong 518129 (CN); YE, Qiang, Shenzhen, Guangdong 518129 (CN)
(74) Representative: Maiwald GmbH
(86) International application number: PCT/CN2024/072824
(87) International publication number: WO 2025/035704

(57) **Abstract**

The present invention relates to the field of intelligent operations and maintenance technologies, and discloses a fault detection method, system, and apparatus, and a storage medium. The method includes: A plurality of fault events that have an association relationship and a plurality of corresponding faulty network elements are determined. Based on the fault events corresponding to the plurality of faulty network elements, a target protocol stack between the plurality of faulty network elements is determined. Then, based on a target protocol stack of each faulty network element, a plurality of protocol layers of each faulty network element and a hierarchical structure of the plurality of protocol layers are separately determined, so that an internal propagation path is determined. Then, based on the corresponding target protocol stack between the plurality of faulty network elements, an external propagation path between the plurality of faulty network elements that are connected through corresponding target protocol layers is determined. Finally, based on a fault event that occurs in each faulty network element, a fault layer in the plurality of protocol layers corresponding to each faulty network element is determined. In this way, based on the internal propagation path and the external propagation path, a fault propagation path of a plurality of fault events corresponding to a plurality of fault layers may be determined.

## Description

This application claims priority to Chinese Patent Application No. 202311018430.1, filed with the China National Intellectual Property Administration on August 11, 2023 and entitled "FAULT DETECTION METHOD, SYSTEM, AND APPARATUS, AND STORAGE MEDIUM", which is incorporated herein by reference in its entirety.

### TECHNICAL FIELD

The present invention relates to the field of intelligent operations and maintenance technologies, and in particular, to a fault detection method, system, and apparatus, and a storage medium.

### BACKGROUND

On an intelligent operations and maintenance (artificial intelligence for information technology operations, AIOps) platform, artificial intelligence (artificial intelligence, AI) is applied to information technology operations and maintenance (information technology operations, IT Operations). IT data such as logs, monitoring metrics, and event data is analyzed by using a machine learning algorithm (for example, deep learning (deep learning, DL)), to implement operations and maintenance management such as fault detection, event management, capacity planning, and security monitoring in a service system, so that operations and maintenance management efficiency of the system is improved.

However, when fault events that have an association relationship occur in the service system, the AIOps can only determine, based on the fault events, corresponding faulty network elements in which faults occur, and cannot determine a fault propagation path between the faulty network elements. This is not conducive to overhauling and maintenance by operations and maintenance personnel, and operations and maintenance efficiency is low.

### SUMMARY

Embodiments of the present invention provide a fault detection method, system, and apparatus, and a storage medium.

According to a first aspect, the present invention provides a fault detection method. The method is applied to a system including a plurality of network elements, and includes: determining a plurality of fault events that have an association relationship and a plurality of faulty network elements corresponding to the plurality of fault events; determining, based on a preset mutual communication relationship that is between the plurality of faulty network elements and that corresponds to the fault events, a target protocol stack between the plurality of faulty network elements; determining, based on a target protocol stack of each faulty network element, a plurality of protocol layers of each faulty network element, and determining, based on a hierarchical structure of the plurality of protocol layers, an internal propagation path of a corresponding faulty network element; determining, based on a preset interconnection relationship that is between the plurality of faulty network elements and that corresponds to the target protocol stack, an external propagation path between the plurality of faulty network elements that are connected through target protocol layers corresponding to the target protocol stack, where the target protocol layer used by each faulty network element for connection is a protocol layer in the plurality of protocol layers corresponding to each faulty network element; determining, based on a corresponding fault event that occurs in each faulty network element, a fault layer in the plurality of protocol layers corresponding to each faulty network element; and determining, based on the internal propagation path and the external propagation path, a fault propagation path of a plurality of fault events corresponding to a plurality of fault layers.

In a possible implementation of the first aspect, determining, based on the hierarchical structure of the plurality of protocol layers, the internal propagation path of the corresponding faulty network element includes: determining, based on the plurality of protocol layers of the faulty network element and the hierarchical structure of the plurality of protocol layers, an internal topology of the corresponding faulty network element; and determining, based on the internal topology of the faulty network element, the internal propagation path of the faulty network element in the plurality of protocol layers of the corresponding faulty network element.

In a possible implementation of the first aspect, determining, based on the preset interconnection relationship that is between the plurality of faulty network elements and that corresponds to the target protocol stack, the external propagation path between the plurality of faulty network elements that are connected through the target protocol layers corresponding to the target protocol stack includes: connecting, based on the preset interconnection relationship that is between the plurality of faulty network elements and that corresponds to the target protocol stack, a plurality of internal topologies corresponding to the plurality of faulty network elements through the target protocol layers corresponding to the target protocol stack, to form a detailed topology; and determining, based on the target protocol layers that connect the plurality of internal topologies in the detailed topology, the external propagation path between the plurality of faulty network elements.

In a possible implementation of the first aspect, determining, based on the corresponding fault event that occurs in each faulty network element, the fault layer in the plurality of protocol layers corresponding to each faulty network element includes: performing event labeling on each fault event; determining, based on the corresponding fault event that occurs in each faulty network element and an event label corresponding to the fault event, the fault layer in the plurality of protocol layers corresponding to each faulty network element and a layer label of the fault layer; and determining, based on the layer label and the event label, a correspondence between the fault layer and the fault event.

In a possible implementation of the first aspect, determining, based on the internal propagation path and the external propagation path, the fault propagation path of the plurality of fault events corresponding to the plurality of fault layers includes: determining, based on the internal propagation path and the external propagation path, a hierarchical propagation path of the plurality of fault layers corresponding to the plurality of faulty network elements between a plurality of protocol layers of the plurality of faulty network elements; and determining, based on the hierarchical propagation path and the correspondence between the fault layer and the fault event, the fault propagation path of the corresponding plurality of fault events between the plurality of protocol layers of the plurality of faulty network elements.

In a possible implementation of the first aspect, determining the target protocol stack between the plurality of faulty network elements includes: determining a preset protocol stack set for mutual communication between the plurality of faulty network elements, where the protocol stack set includes a plurality of protocol stacks for the mutual communication between the plurality of faulty network elements; and determining, from the plurality of protocol stacks, based on the preset mutual communication relationship that is between the plurality of faulty network elements and that corresponds to the fault events, the corresponding target protocol stack between the plurality of faulty network elements.

In a possible implementation of the first aspect, determining the plurality of fault events that have the association relationship includes: determining a plurality of fault occurrence time points corresponding to the plurality of fault events, and determining, corresponding to the plurality of fault occurrence time points satisfying a preset time association relationship, that the plurality of fault events have the association relationship; determining the plurality of faulty network elements corresponding to the plurality of fault events, and determining, corresponding to the plurality of faulty network elements satisfying a preset network element association relationship, that the plurality of fault events have the association relationship; or determining a plurality of event types corresponding to the plurality of fault events, and determining, corresponding to the plurality of event types satisfying a preset type association relationship, that the plurality of fault events have the association relationship.

According to a second aspect, the present invention provides a fault detection system, including: an internal topology generation module that determines, from a preset protocol stack set for mutual communication between a plurality of faulty network elements based on a preset mutual communication relationship that is between the plurality of faulty network elements and that corresponds to occurred fault events, a target protocol stack between the plurality of faulty network elements; and determines, based on a plurality of protocol layers corresponding to a target protocol stack of each faulty network element; and a hierarchical structure of the plurality of protocol layers, an internal topology of a corresponding faulty network element; a detailed topology generation module that connects, based on a preset interconnection relationship that is between the plurality of faulty network elements and that corresponds to the target protocol stack, a plurality of internal topologies corresponding to the plurality of faulty network elements through target protocol layers in a corresponding target protocol stack, to form a detailed topology, where the target protocol layer used by each faulty network element for connection is a protocol layer in the plurality of protocol layers corresponding to each faulty network element; an event label positioning module that performs event labeling on each fault event; and determines, based on a corresponding fault event that occurs in each faulty network element and an event label corresponding to the fault event, a fault layer in the plurality of protocol layers corresponding to each faulty network element and a layer label of the fault layer; and determines, based on the layer label and the event label, a correspondence between the fault layer and the fault event; and a fault detection module that determines, based on the internal topology and the detailed topology, a hierarchical propagation path of a plurality of fault layers corresponding to the plurality of faulty network elements between a plurality of protocol layers of the plurality of faulty network elements; and determines, based on the hierarchical propagation path and the correspondence between the fault layer and the fault event, the fault propagation path of the corresponding plurality of fault events between the plurality of protocol layers of the plurality of faulty network elements.

According to a third aspect, the present invention provides a fault detection apparatus, including: an internal topology generation unit that determines, from a preset protocol stack set for mutual communication between a plurality of faulty network elements based on a preset mutual communication relationship that is between the plurality of faulty network elements and that corresponds to occurred fault events, a target protocol stack between the plurality of faulty network elements; and determines, based on a plurality of protocol layers corresponding to a target protocol stack of each faulty network element; and a hierarchical structure of the plurality of protocol layers, an internal topology of a corresponding faulty network element; a detailed topology generation unit that connects, based on a preset interconnection relationship that is between the plurality of faulty network elements and that corresponds to the target protocol stack, a plurality of internal topologies corresponding to the plurality of faulty network elements through target protocol layers in a corresponding target protocol stack, to form a detailed topology, where the target protocol layer used by each faulty network element for connection is a protocol layer in the plurality of protocol layers corresponding to each faulty network element; an event label positioning unit that performs event labeling on each fault event; and determines, based on a corresponding fault event that occurs in each faulty network element and an event label corresponding to the fault event, a fault layer in the plurality of protocol layers corresponding to each faulty network element and a layer label of the fault layer; and determines, based on the layer label and the event label, a correspondence between the fault layer and the fault event; and a fault detection unit that determines, based on the internal topology and the detailed topology, a hierarchical propagation path of a plurality of fault layers corresponding to the plurality of faulty network elements between a plurality of protocol layers of the plurality of faulty network elements; and determines, based on the hierarchical propagation path and the correspondence between the fault layer and the fault event, the fault propagation path of the corresponding plurality of fault events between the plurality of protocol layers of the plurality of faulty network elements.

According to a fourth aspect, an embodiment of the present invention provides a readable storage medium, where the readable storage medium stores instructions; and when the instructions are executed on an electronic device, the electronic device is enabled to implement the fault detection method provided in the first aspect and the possible implementations of the first aspect.

According to a fifth aspect, an embodiment of the present invention provides a program product, where the program product includes instructions; and when the instructions are executed by an electronic device, the electronic device may be enabled to implement the fault detection method provided in the first aspect and the possible implementations of the first aspect.

### BRIEF DESCRIPTION OF DRAWINGS

FIG. 1 is a diagram of fault information according to some embodiments of the present invention;
FIG. 2 is an example diagram of a fault detection system according to some embodiments of the present invention;
FIG. 3 is an example diagram of another fault detection system according to some embodiments of the present invention;
FIG. 4A and FIG. 4B are example diagrams of an implementation process of an internal topology generation module according to some embodiments of the present invention;
FIG. 5 is an example diagram of an implementation process of a detailed topology generation module according to some embodiments of the present invention;
FIG. 6 is an example diagram of an internal topology through event label positioning according to some embodiments of the present invention;
FIG. 7 is an example diagram of a detailed topology through label positioning according to some embodiments of the present invention;
FIG. 8 is an example diagram of an implementation process of a fault detection module according to some embodiments of this application;
FIG. 9 is an example diagram of still another fault detection system according to some embodiments of the present invention;
FIG. 10 is another example diagram of an implementation process of an internal topology generation module according to some embodiments of the present invention;
FIG. 11 is a schematic flowchart of a fault detection method according to some embodiments of the present invention; and
FIG. 12 is an example diagram of a fault detection apparatus according to some embodiments of the present invention.

### DESCRIPTION OF EMBODIMENTS

Illustrative embodiments of the present invention include but are not limited to a fault detection method, system, and apparatus, and a storage medium.

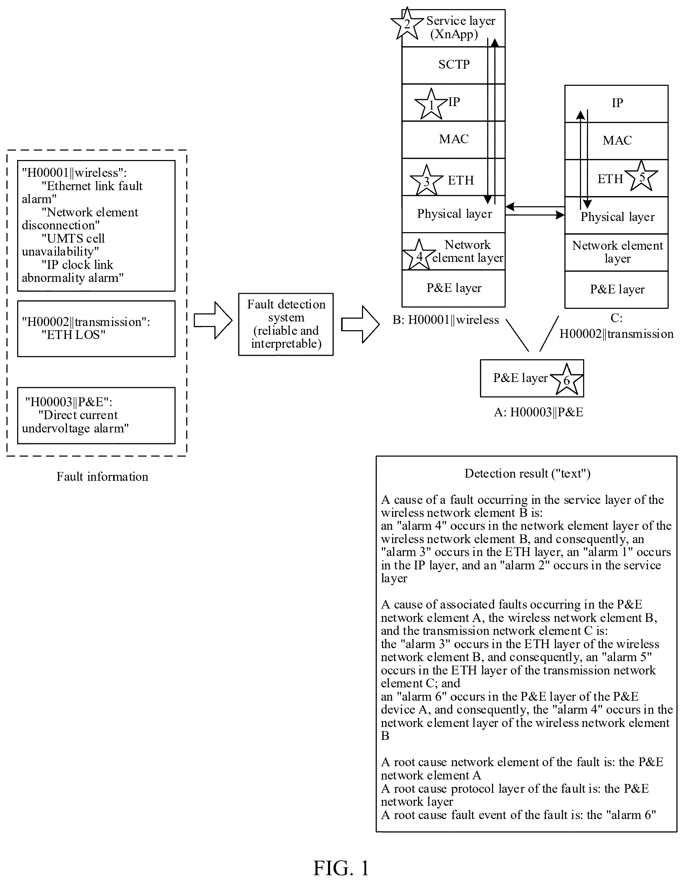

The following describes technical solutions of the present invention with reference to FIG. 1 to FIG. 12.

In some embodiments, when fault events that have an association relationship occur in a service system in which AIOps is deployed, usually, the AIOps can only determine corresponding faulty network elements (for example, a router, a switch, a server, and a base station, and are referred to as NEs for short in the following) in the service system based on the fault events, and it is difficult to determine a fault propagation path between the faulty network elements. In other words, the fault propagation path between the faulty network elements cannot be presented to operations and maintenance personnel. This is not conducive to overhauling and maintenance by the operations and maintenance personnel on the faulty network elements based on the fault events that have the association relationship.

For example, in a wireless communication service system, when a fault event of a direct current undervoltage alarm occurs in a power and environment network element (for example, a power supply device, and is referred to as a P&E network element for short in the following) in an area, there may be a lack of power supply. Due to the lack of power supply, fault events of an Ethernet link fault alarm, network element disconnection, universal mobile telecommunications system (universal mobile telecommunications system, UMTS) cell unavailability, an internet protocol (internet protocol, IP) clock link abnormality alarm, and the like may occur in a wireless network element (for example, a base station), and fault events of Ethernet signal loss (ETH LOS) and the like may occur in a transmission network element (for example, a switch).

However, usually, the AIOps can only determine, based on the fault event of the direct current undervoltage alarm, that a corresponding faulty network element is the P&E network element; determine, based on the fault events of the Ethernet link fault alarm, the network element disconnection, the UMTS cell unavailability, and the IP clock link abnormality alarm, that a corresponding faulty network element is a wireless network element; and determine, based on the fault event of the ETH LOS, that a corresponding faulty network element is a transmission network element. In other words, the AIOps cannot determine a fault propagation path of the foregoing plurality of fault events between the P&E network element, the wireless network element, and the transmission network element. The operations and maintenance personnel may need to perform fault testing on the P&E network element, the wireless network element, and the transmission network element one by one based on each fault event. For example, the operations and maintenance personnel performs the fault testing on the P&E network element, the wireless network element, and the transmission network element separately, to determine whether corresponding faults occur in a corresponding transmission network element, a corresponding wireless network element, and a corresponding P&E network element, and further determines a fault propagation path based on an association between faults occurring in network elements in the fault testing. In this case, efficiency of overhauling and maintenance is low.

As a result, when fault events that have an association relationship occur in the service system, the AIOps can only determine, corresponding faulty network elements based on the fault events, and cannot determine a fault propagation path between the faulty network elements. This is not conducive to overhauling and maintenance by the operations and maintenance personnel.

Therefore, the present invention provides a fault detection method. When a plurality of fault events that have an association relationship are detected, a faulty network element corresponding to each fault event is separately first determined, to obtain a plurality of faulty network elements. Then, a target protocol stack between the plurality of faulty network elements is determined based on a preset mutual communication relationship that is between the plurality of faulty network elements and that corresponds to the fault events. Then, a plurality of protocol layers of each faulty network element and a hierarchical structure of the plurality of protocol layers are separately first determined based on a target protocol stack of each faulty network element, and an internal propagation path in the plurality of protocol layers is determined based on the hierarchical structure of the plurality of protocol layers. Then, based on a preset interconnection relationship that is between the plurality of faulty network elements and that corresponds to the target protocol stack, an external propagation path between the plurality of faulty network elements that are connected through corresponding protocol layers is determined. Finally, a protocol layer to which each fault event belongs (referred to as a fault layer for short in the following) is separately determined based on the fault event that occurs in each faulty network element, to obtain a plurality of fault layers. In this way, based on the determined internal propagation path and the determined external propagation path, a fault propagation path of the plurality of fault events corresponding to the plurality of fault layers between a plurality of protocol layers of the plurality of faulty network elements can be determined. Therefore, when the plurality of fault events that have the association relationship are detected, the operations and maintenance personnel can sequentially perform overhauling and maintenance based on the fault propagation path of the plurality of fault events, so that the efficiency of overhauling and maintenance is ensured.

In some embodiments, whether a plurality of fault events have an association relationship may be determined based on information such as a plurality of fault occurrence time points corresponding to the plurality of fault events, a plurality of faulty network elements corresponding to the plurality of fault events, or a plurality of event types corresponding to the plurality of fault events. For example, when a time interval between a latest fault occurrence time point and an earliest fault occurrence time point in the plurality of fault occurrence time points corresponding to the plurality of fault events satisfies a preset time interval threshold, or a time difference between the plurality of fault occurrence time points corresponding to the plurality of fault events satisfies a preset time difference threshold, it may be determined that the plurality of fault occurrence time points satisfy a preset time association relationship. Further, that the plurality of fault events have an association relationship is determined. For another example, when the plurality of faulty network elements corresponding to the plurality of fault events satisfy a preset network element association relationship, it may be determined that the plurality of fault events have an association relationship. Alternatively, for example, when a plurality of event types corresponding to the plurality of fault events satisfy a preset type association relationship, it may be determined that the plurality of fault events have an association relationship, and the like. In some other embodiments, an association relationship between the plurality of fault events, for example, a logical association between events, may be alternatively determined in another manner. This is not specifically limited.

In some embodiments, as shown in FIG. 1, when a plurality of fault events that have an association relationship are detected, fault information of the fault events may be input into a fault detection system. The fault detection system determines internal propagation paths and an external propagation path of the plurality of fault events in a plurality of corresponding faulty network elements, and determines, based on the internal propagation paths and the external propagation path, a fault propagation path of the plurality of fault events, so that the fault propagation path is reliable and interpretable.

The following uses fault information shown in FIG. 1 as an example to describe some embodiments of this application.

In some embodiments, as shown in FIG. 1, the fault information includes: a plurality of faulty network elements such as an "H00001 ∥wireless" wireless network element B (referred to as a wireless network element B for short in the following), an "H00002∥transmission" transmission network element C (referred to as a transmission network element C for short in the following), and an "H00003∥P&E" P&E network element A (referred to as a P&E network element A for short in the following) that have a preset network element association relationship, and fault events corresponding to faulty network elements, where a fault event of the wireless network element B include an Ethernet link fault alarm, network element disconnection, UMTS cell unavailability, and an IP clock link abnormality alarm, a fault event of the transmission network element C includes a fault event of ETH LOS, and a fault event of the P&E network element A includes a direct current undervoltage alarm. Further, after the fault information is input into the fault detection system, the fault detection system may output a plurality of protocol layers of the plurality of faulty network elements corresponding to the plurality of fault events in the fault information, a hierarchical structure of the plurality of protocol layers, and a connection relationship between the plurality of faulty network elements through corresponding protocol layers. Then, an internal propagation path in a corresponding faulty network element may be determined by using the hierarchical structure of the plurality of protocol layers, and an external propagation path between the plurality of faulty network elements may be determined by using the connection relationship between the plurality of faulty network elements through the corresponding protocol layers.

In some embodiments, as shown in FIG. 1, the wireless network element B follows a hierarchical structure including protocol layers such as a P&E layer, a network element layer, a physical layer, an Ethernet (ETH) protocol layer, a media access control (media access control, MAC) protocol layer, an internet protocol (internet protocol, IP) layer, a stream control transmission protocol (stream control transmission protocol, SCTP) layer, and a service layer (XnApp) from bottom to top. The transmission network element C follows a hierarchical structure including protocol layers such as a P&E layer, a network element layer, a physical layer, an ETH protocol layer, a MAC protocol layer, and an IP protocol layer from bottom to top. The P&E network element A includes a protocol layer like a P&E layer. The wireless network element B is connected, through the corresponding physical layer, to the physical layer corresponding to the transmission network element C. The wireless network element B is connected, through the corresponding P&E layer, to the P&E layer corresponding to the P&E network element A. The transmission network element C is connected, through the corresponding P&E layer, to the P&E layer corresponding to the P&E network element A.

It may be understood that, in a plurality of protocol layers, a lower layer provides a service for an upper layer. A fault of the lower layer causes a fault in the upper layer, but a fault of the upper layer does not cause a fault in the lower layer. For example, in the plurality of protocol layers of the wireless network element B, an ETH protocol provides a service for a MAC protocol, the MAC protocol provides a service for an IP protocol, and the IP protocol provides a service for an SCTP protocol. In this way, the internal propagation path corresponding to each faulty network element may be determined based on the plurality of protocol layers included in each faulty network element and the hierarchical structure of the plurality of protocol layers.

For example, an internal propagation path in the wireless network element B is sequentially the P&E layer, the network element layer, the physical layer, the ETH layer, the MAC layer, the IP layer, the SCTP layer, and the service layer. An internal propagation path in the transmission network element C is sequentially the P&E layer, the network element layer, the physical layer, the ETH layer, the MAC layer, and the IP layer.

Further, the external propagation path between the plurality of faulty network elements is determined by using the connection relationship between the plurality of faulty network elements through the corresponding protocol layers. For example, an external propagation path between the wireless network element B and the transmission network element C is: a connection between the physical layer of the wireless network element B and the corresponding physical layer of the transmission network element C. An external propagation path between the wireless network element B and the P&E network element A is: the P&E layer of the wireless network element B and the P&E layer of the P&E network element A. An external propagation path between the transmission network element C and the P&E network element A is: the P&E layer of the transmission network element C and the P&E layer of the P&E network element A.

In some embodiments, a fault layer in the plurality of protocol layers corresponding to each faulty network element is separately determined based on a fault event that occurs in each faulty network element, to obtain a plurality of fault layers. Based on layer locations of the plurality of fault layers in the plurality of protocol layers of each faulty network element, the internal propagation path, and the external propagation path, a fault propagation path of the plurality of fault events corresponding to the plurality of fault layers may be determined.

For example, based on the fault event of the direct current undervoltage alarm that occurs in the P&E network element A, the P&E layer of the P&E network element A is correspondingly determined as a fault layer. Based on the fault events of the Ethernet link fault alarm, the network element disconnection, the UMTS cell unavailability, and the IP clock link abnormality alarm that occur in the wireless network element B, the ETH layer, the network element layer, the service layer, and the IP layer of the wireless network element B are correspondingly determined as fault layers. Based on the fault event of the ETH LOS that occurs in the transmission network element C, the ETH layer of the transmission network element C is correspondingly determined as a fault layer.

In some embodiments, corresponding label positioning may be performed on each fault event and a fault layer corresponding to each fault event (referred to as label positioning for short in the following). For example, label positioning is performed on a fault layer by using an icon and a number that are indicated by a star identifier in FIG. 1. The fault layer is determined by using the icon indicated by the star identifier, and a correspondence between the fault layer and a fault event is determined by using the number in the star identifier, so that a fault propagation path of each fault event corresponding to each fault layer is subsequently determined through label positioning.

For example, when the fault event of the direct current undervoltage alarm that occurs in the P&E network element A is labeled as an "alarm 6", the P&E layer that is determined as the fault layer and that is of the P&E network element A is correspondingly labeled 6. When the fault events of the Ethernet link fault alarm, the network element disconnection, the UMTS cell unavailability, and the IP clock link abnormality alarm that occur in the network element B are sequentially labeled as an "alarm 3", an "alarm 4", an "alarm 2", and an "alarm 1", the ETH layer, the network element layer, the service layer, and the IP layer that are determined as the fault layers and that are of the wireless network element B are correspondingly labeled 3, 4, 2, and 1. When the fault event of the ETH LOS that occurs in the transmission network element C is labeled as an "alarm 5", the ETH layer that is determined as the fault layer and that is of the transmission network element C is correspondingly labeled 5.

In some embodiments, as shown in FIG. 1, based on the internal propagation path, the external propagation path, and the corresponding fault layer that are determined by the fault detection system, a fault propagation path of a fault event corresponding to a fault layer in each faulty network element may be determined. For example, as shown in FIG. 1, the fault detection system may output a detection result in a text form. The detection result output by the fault detection system may include: A cause of a fault occurring in the service layer of the wireless network element B is: the "alarm 4" occurs in the network element layer of the wireless network element B, and consequently, in the wireless network element B, the "alarm 3" occurs in the ETH layer, the "alarm 1" occurs in the IP layer, and the "alarm 2" occurs in the service layer. That is, a corresponding fault propagation path is 4→3→1→2. A cause of associated faults occurring in the P&E network element A, the wireless network element B, and the transmission network element C is: the "alarm 3" occurs in the ETH layer of the wireless network element B, and consequently, the "alarm 5" occurs in the ETH layer of the transmission network element C. A corresponding fault propagation path is 3→5. The "alarm 6" occurs in the P&E layer of the P&E network element A, and consequently, the "alarm 4" occurs in the network element layer of the wireless network element B. A corresponding fault propagation path is 6→4. In this way, based on fault propagation paths 4→3→1→2, 3→5, and 6→4, it may be determined that a root cause network element of the fault is the P&E network element A, a root cause protocol layer is the P&E network layer, and a root cause fault event is the "alarm 6".

In some other embodiments, the detection result may be alternatively displayed in another form, like a form of a chart, or a form of a combination of pictures and text. This is not specifically limited.

In this way, the operations and maintenance personnel may sequentially perform overhauling and maintenance based on a fault propagation path of a plurality of fault events, so that efficiency of overhauling and maintenance is ensured.

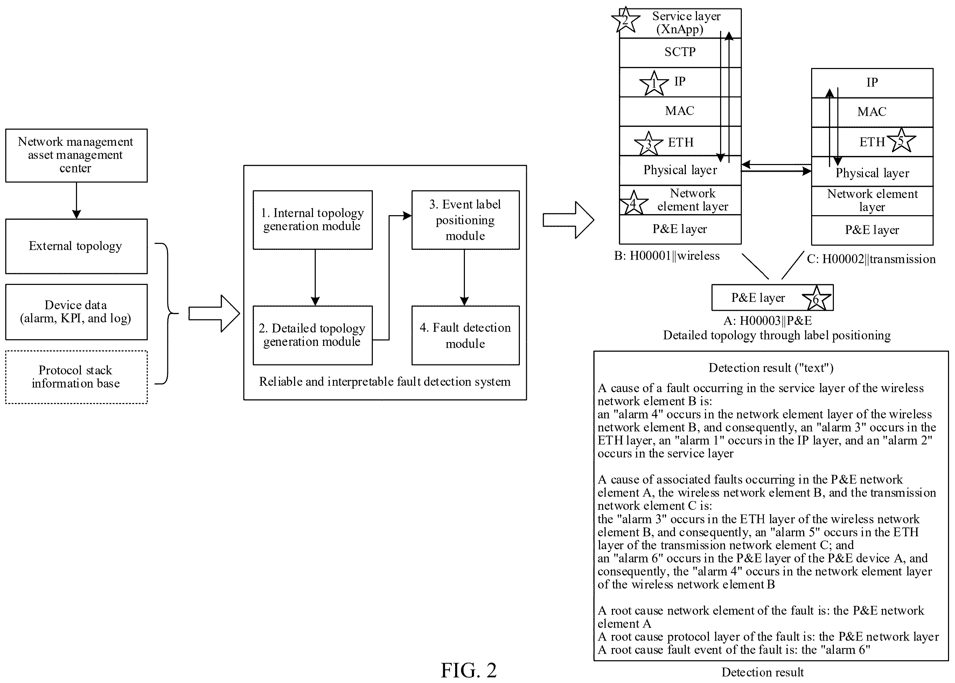

FIG. 2 is a diagram of a structure of a reliable and interpretable fault detection system according to some embodiments of this application. As shown in FIG. 2, the fault detection system includes an internal topology generation module, a detailed topology generation module, an event label positioning module, and a fault detection module. An input of the fault detection system may be an external topology and device data, or may be an external topology, device data, and a protocol stack information base. An output of the fault detection system is a detailed topology through label positioning and a detection result.

In some embodiments, after a plurality of fault events are detected and a plurality of faulty network elements corresponding to the plurality of fault events are determined, the fault detection system uses each faulty network element as a vertex, and obtains a communication connection relationship between the plurality of faulty network elements by using asset management data (a network management asset management center) of a network management device, to use the communication connection relationship as an edge connecting two vertexes. In this way, an external topology is formed. It may be understood that the external topology includes vertexes and edges, each vertex indicates one faulty network element, an edge between two vertexes indicates a communication connection relationship between two faulty network elements corresponding to the two vertexes, and the connection relationship may carry a plurality of protocol stacks. Then, the fault detection system obtains, based on each vertex on the external topology, device data (for example, an alarm, a KPI, or a log) of a corresponding faulty network element, to subsequently determine, based on the device data of each faulty network element, a fault event that occurs corresponding to each faulty network element. In addition, the fault detection system determines, based on fault events in faulty network elements connected by each edge, a type of a faulty protocol stack, and then obtains, based on the type of the protocol stack, protocol stack information from the protocol stack information base. The protocol stack information includes a plurality of protocol layers and a hierarchical structure of the plurality of protocol layers.

In some embodiments, the fault detection system inputs the external topology, the device data, and the protocol stack information base into the internal topology generation module. Then, the internal topology generation module determines, based on the faulty network elements connected by each edge in the external topology and the fault events in the faulty network elements, a type of a faulty protocol stack on a corresponding edge, and determines, from the protocol stack information base, a target protocol stack corresponding to the type of the faulty protocol stack, a plurality of protocol layers of the target protocol stack, and a hierarchical structure of the plurality of protocol layers, to construct an internal topology of each faulty network element. It may be understood that the internal topology indicates a plurality of protocol layers in a faulty target protocol stack of a corresponding faulty network element and a hierarchical structure of the plurality of protocol layers. An internal propagation path corresponding to each faulty network element may be determined by using the plurality of protocol layers of each faulty network element and the hierarchical structure of the plurality of protocol layers.

In some other embodiments, the fault detection system may alternatively input only an external topology and device data into the internal topology generation module, and the internal topology generation module may determine, based on a machine learning model, a target protocol stack of each faulty network element, to construct an internal topology of each faulty network element, and the like. This is not specifically limited.

In some embodiments, after obtaining the internal topology, the internal topology generation module inputs the internal topology into the detailed topology generation module. Then, the detailed topology generation module determines, from a plurality of protocol stacks included in a corresponding edge in the external topology, based on a corresponding target protocol stack between a plurality of faulty network elements, a preset interconnection relationship that is between the plurality of faulty network elements and that corresponds to the target protocol stack, and connects internal topologies corresponding to the faulty network elements, to construct a detailed topology corresponding to the plurality of faulty network elements. It may be understood that the detailed topology indicates a connection relationship between the plurality of faulty network elements that are connected through corresponding protocol layers. An external propagation path corresponding to the plurality of faulty network elements may be determined by using the connection relationship between the plurality of faulty network elements that are connected through the corresponding protocol layers.

In some embodiments, after obtaining the detailed topology, the detailed topology generation module inputs the detailed topology into the event label positioning module. Then, the event label positioning module separately determines, based on the fault event that occurs in each faulty network element, a protocol layer (that is, a fault layer) to which each fault event belongs, and performs corresponding label positioning on each fault event and the fault layer corresponding to each fault event, to obtain a detailed topology through label positioning.

In some embodiments, after obtaining the detailed topology through label positioning, the event label positioning module inputs the detailed topology through label positioning into the fault detection module. Then, the fault detection module may obtain, based on each internal topology (that is, an internal propagation path) in the detailed topology through label positioning, a connection relationship between the internal topologies (that is, an external propagation path), and a fault layer through label positioning, a fault propagation path of each fault event corresponding to each fault layer, and output a detection result.

The following describes some embodiments of this application by using an example in which an external topology, device data, and a protocol stack information base are used as an input of a fault detection system.

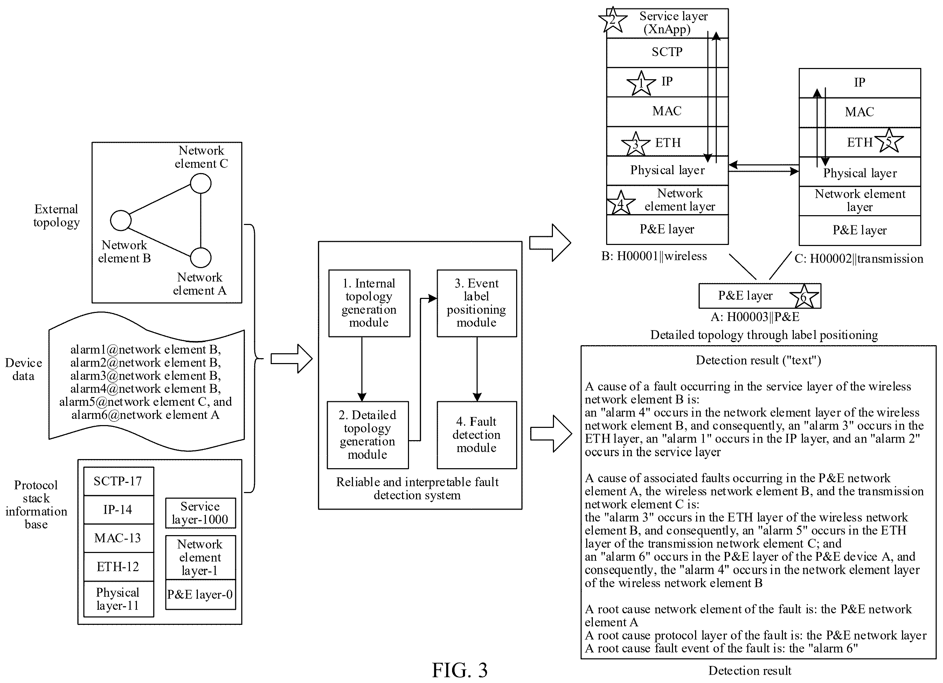

With reference to the example in FIG. 1, according to some embodiments of this application, FIG. 3 shows a diagram of a structure of another reliable and interpretable fault detection system by using the external topology, the device data, and the protocol stack information base as the input of the fault detection system. As shown in FIG. 3, the fault detection system includes an internal topology generation module, a detailed topology generation module, an event label positioning module, and a fault detection module. The input of the fault detection system is the external topology, the device data, and the protocol stack information base. An output of the fault detection system is a detailed topology through label positioning and a detection result.

In some embodiments, as shown in FIG. 1 and FIG. 3, vertexes in the external topology separately indicate the P&E network element A, the wireless network element B, and the transmission network element C. In the external topology, an edge between the P&E network element A and the wireless network element B indicates a plurality of protocol stacks between the P&E network element A and the wireless network element B, an edge between the P&E network element A and the transmission network element C indicates a plurality of protocol stacks between the P&E network element A and the transmission network element C, and an edge between the wireless network element B and the transmission network element C indicates a plurality of protocol stacks between the wireless network element B and the transmission network element C.

Further, in the device data, alarm6@network element A indicates fault event information of the direct current undervoltage alarm that occurs corresponding to the P&E network element A. alarm1@network element B, alarm2@network element B, alarm3@network element B, and alarm4@network element B indicate fault event information of the IP clock link abnormality alarm, the UMTS cell unavailability, the Ethernet link fault alarm, and the network element disconnection that occur corresponding to the wireless network element B. alarm5@network element C indicates fault event information of the ETH LOS that occurs corresponding to the transmission network element C.

Further, the protocol stack information includes a plurality of protocol layers corresponding to a plurality of protocol stacks between the P&E network element A, the wireless network element B, and the transmission network element C, and a hierarchical structure of the plurality of protocol layers. The wireless network element B is used as an example. A plurality of protocol stacks between the wireless network element B and the transmission network element C or between the wireless network element B and the P&E network element A include an Xn protocol stack, a P&E protocol stack, and a service protocol stack. The Xn protocol stack includes protocol layers of a physical layer, an ETH layer, a MAC layer, an IP layer, and an SCTP layer, and when corresponding to the wireless network element B, rankings of the physical layer, the ETH layer, the MAC layer, the IP layer, and the SCTP layer in the hierarchical structure are sequentially 11, 12, 13, 14, and 17. The P&E protocol stack includes protocol layers of a P&E layer and a network element layer, and rankings of the P&E layer and the network element layer in the hierarchical structure are sequentially 0 (a bottom layer) and 1. The service protocol stack includes a protocol layer of a service layer, and the service layer in the hierarchical structure is 1000 (a highest layer).

The following uses an example to describe an implementation process of each module in FIG. 3.

### 1. Internal topology generation module

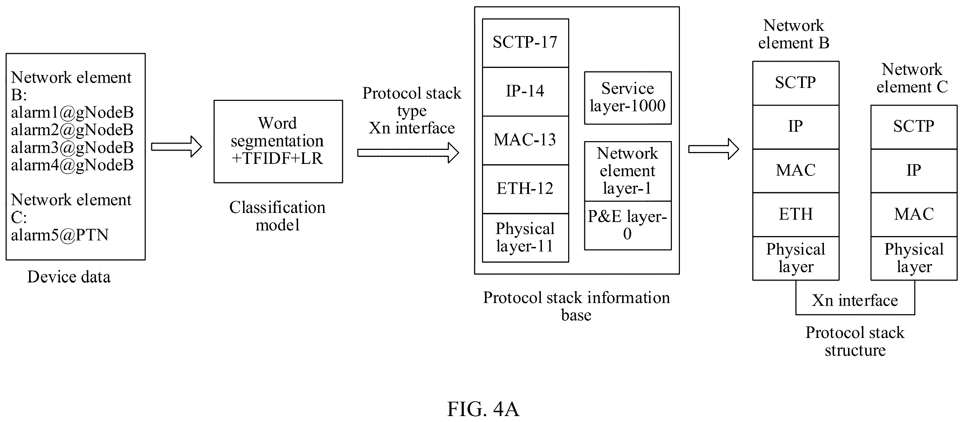

In some embodiments, the fault detection system inputs the external topology, the device data, and the protocol stack information base into the internal topology generation module. The internal topology generation module determines, based on the fault event information corresponding to the P&E network element A, the wireless network element B, and the transmission network element C, a type of faulty protocol stacks corresponding to fault events between the P&E network element A, the wireless network element B, and the transmission network element C. Then, the internal topology generation module determines, based on the type of the protocol stack, corresponding target protocol stacks from the protocol stack information base, and constructs, based on the target protocol stacks, an internal topology of each network element. For example, as shown in FIG. 4A, based on the fault event information of the IP clock link abnormality alarm (alarm1@network element B), the UMTS cell unavailability (alarm2@network element B), the Ethernet link fault alarm (alarm3@network element B), and the network element disconnection (alarm4@network element B) that occur corresponding to the wireless network element B, and the fault event information of the ETH LOS (alarm5@network element C) that occur corresponding to the transmission network element C, processing and analysis such as word segmentation, term frequency-inverse document frequency (term frequency-inverse document frequency, TF-IDF), and logistic regression (logistic regression, LR) are performed by using a classification model. In this way, it can be determined that a faulty target protocol stack between the wireless network element B and the transmission network element C is an Xn protocol stack of an Xn interface type. Based on a plurality of protocol layers of the Xn protocol stack and a hierarchical structure in the protocol stack information, it can be determined that the wireless network element B includes the physical layer, the ETH layer, the MAC layer, the IP layer, and the SCTP layer, and the transmission network element C includes a physical layer, an ETH layer, a MAC layer, and an IP layer.

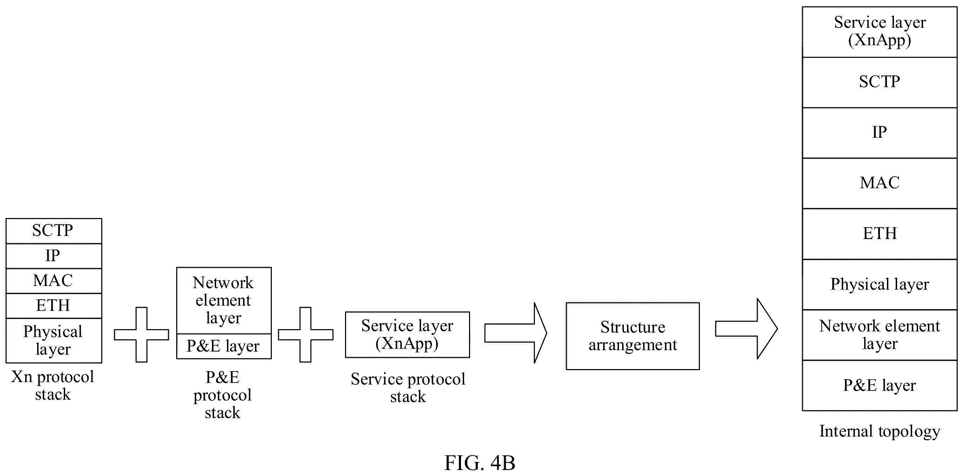

In some embodiments, based on a service system scenario in which a faulty network element is located, a preset protocol stack of the faulty network element may be alternatively determined. For example, as shown in FIG. 4B, in a wireless communication service system scenario, preset protocol stacks of the wireless network element B may include a P&E protocol stack and a service protocol stack. In this way, based on an Xn protocol stack, the P&E protocol stack, and the service protocol stack of the wireless network element B, an internal topology of the wireless network element B may be obtained and includes a P&E layer, a network element layer, a physical layer, an ETH layer, a MAC layer, an IP layer, an SCTP layer, and a service layer from bottom to top. Correspondingly, an internal topology of the P&E network element A includes only a P&E layer, and an internal topology of the transmission network element C includes a P&E layer, a network element layer, a physical layer, an ETH layer, a MAC layer, and an IP layer from bottom to top.

### 2. Detailed topology generation module

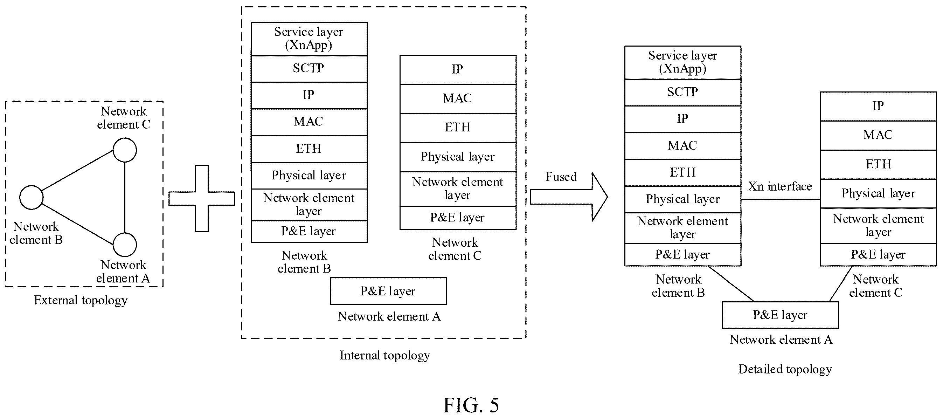

In some embodiments, after obtaining the internal topology, the internal topology generation module inputs the internal topology into the detailed topology generation module. The detailed topology generation module determines, based on the corresponding target protocol stacks between the P&E network element A, the wireless network element B, and the transmission network element C, a preset interconnection relationship that is between the network elements and that corresponds to the target protocol stacks from a plurality of protocol stacks included in a corresponding edge in the external topology. The detailed topology generation module connects corresponding internal topologies, to construct a detailed topology corresponding to the P&E network element A, the wireless network element B, and the transmission network element C. For example, the wireless network element B is connected to the transmission network element C through physical layers corresponding to the two network elements, the wireless network element B is connected to the P&E network element A through P&E layers corresponding to the two network elements, and the transmission network element C is connected to the P&E network element A through P&E layers corresponding to the two network elements. In this way, as shown in FIG. 5, the physical layer in the internal topology of the wireless network element B is connected to the physical layer in the internal topology of the transmission network element C through an Xn interface, the P&E layer in the internal topology of the wireless network element B is connected to the P&E layer in the internal topology of the P&E network element A, and the P&E layer in the internal topology of the transmission network element C is connected to the P&E layer in the internal topology of the P&E network element A, to obtain a detailed topology of the P&E network element A, the wireless network element B, and the transmission network element C.

### 3. Event label positioning module

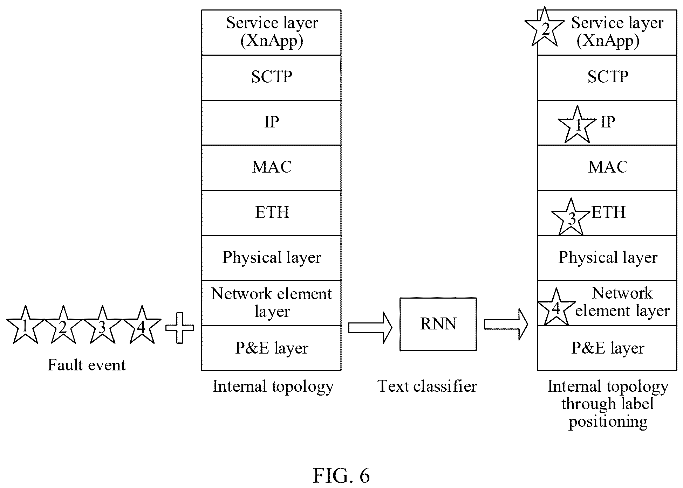

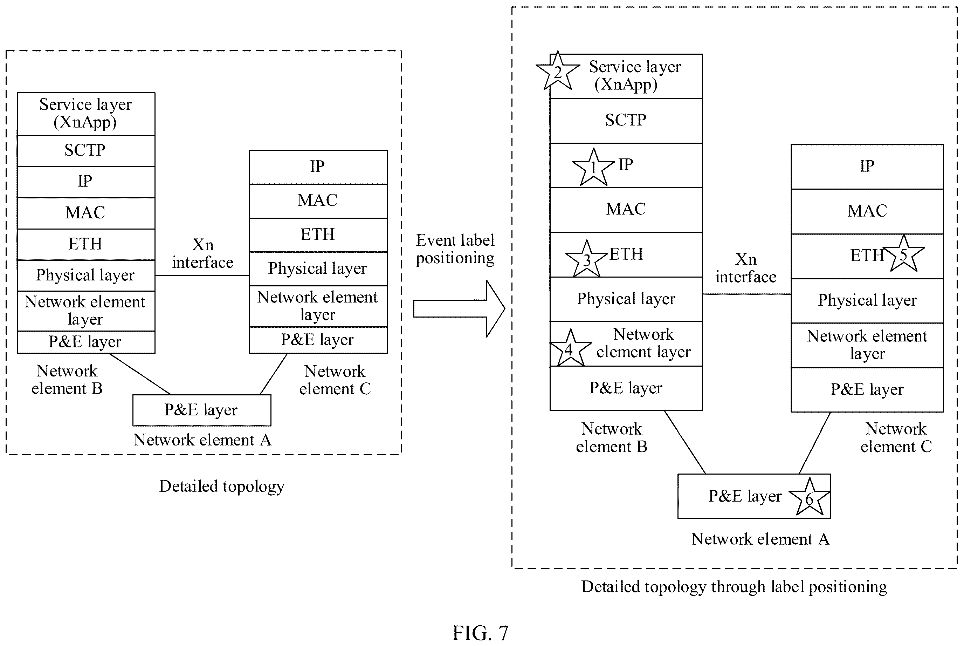

In some embodiments, after obtaining the detailed topology, the detailed topology generation module inputs the detailed topology into the event label positioning module. The event label positioning module separately determines, based on the fault events that occur in the P&E network element A, the wireless network element B, and the transmission network element C, fault layers in the plurality of protocol layers of the P&E network element A, the wireless network element B, and the transmission network element C. Then, the event label positioning module performs corresponding label positioning on each fault event and a fault layer corresponding to each fault event, to obtain a detailed topology through label positioning. For example, as shown in FIG. 6, after sequentially labeling fault events of the Ethernet link fault alarm, the network element disconnection, the UMTS cell unavailability, and the IP clock link abnormality alarm that occur in the wireless network element B as the "alarm 3", the "alarm 4", the "alarm 2", and the "alarm 1", the event label positioning module inputs the fault events through label positioning by the wireless network element B and the internal topology of the wireless network element B to a text classifier like a recurrent neural network (recurrent neural network, RNN). In this way, it can be determined that fault layers corresponding to the fault events of the Ethernet link fault alarm, the network element disconnection, the UMTS cell unavailability, and the IP clock link abnormality alarm that occur in the wireless network element B are sequentially the network element layer, the ETH layer, the IP layer, and the service layer. In this case, the ETH layer, the network element layer, the service layer, and the IP layer that are determined as the fault layers and that are of the wireless network element B are correspondingly labeled 3, 4, 2, and 1. Correspondingly, when a fault event of the ETH LOS that occurs in the transmission network element C is labeled as the "alarm 5", the ETH layer that is determined as a fault layer and that is of the transmission network element C is correspondingly labeled 5; and when a fault event of the direct current undervoltage alarm that occurs in the P&E network element A is labeled as the "alarm 6", the P&E layer that is determined as a fault layer and that is of the P&E network element A is correspondingly labeled 6. In this way, a detailed topology through label positioning shown in FIG. 7 is obtained.

### 4. Fault detection module

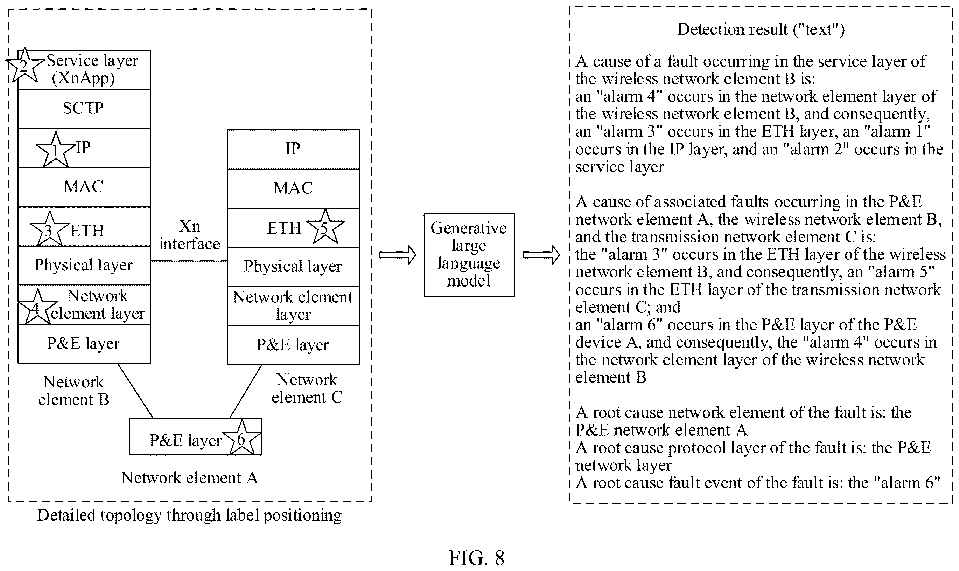

In some embodiments, after obtaining the detailed topology through label positioning, the event label positioning module inputs the detailed topology through label positioning into the fault detection module. The fault detection module inputs the detailed topology through label positioning into a generative large language model (for example, GPT-3, BERT, and T5). The generative large language model may obtain, based on each internal topology (that is, an internal propagation path) in the detailed topology through label positioning, a connection relationship (that is, an external propagation path) between the internal topologies, and fault layers through label positioning, a fault propagation path of each fault event corresponding to each fault layer, and output a detection result. For example, as shown in FIG. 8, the detection result may include: A cause of a fault occurring in the service layer of the wireless network element B is: the "alarm 4" occurs in the network element layer of the wireless network element B, and consequently, in the wireless network element B, the "alarm 3" occurs in the ETH layer, the "alarm 1" occurs in the IP layer, and the "alarm 2" occurs in the service layer. That is, a corresponding fault propagation path is 4→3→1→2. A cause of associated faults occurring in the P&E network element A, the wireless network element B, and the transmission network element C is: the "alarm 3" occurs in the ETH layer of the wireless network element B, and consequently, the "alarm 5" occurs in the ETH layer of the transmission network element C. A corresponding fault propagation path is 3→5. The "alarm 6" occurs in the P&E layer of the P&E network element A, and consequently, the "alarm 4" occurs in the network element layer of the wireless network element B. A corresponding fault propagation path is 6→4. In this way, based on fault propagation paths 4→3→1→2, 3→5, and 6→4, it may be determined that a root cause network element of the fault is the P&E network element A, a root cause protocol layer is the P&E network layer, and a root cause fault event is the "alarm 6".

In this way, the operations and maintenance personnel may sequentially perform overhauling and maintenance based on a fault propagation path of a plurality of fault events, so that efficiency of overhauling and maintenance is ensured.

The following describes some other embodiments of this application by using an example in which an external topology and device data are used as an input of the fault detection system.

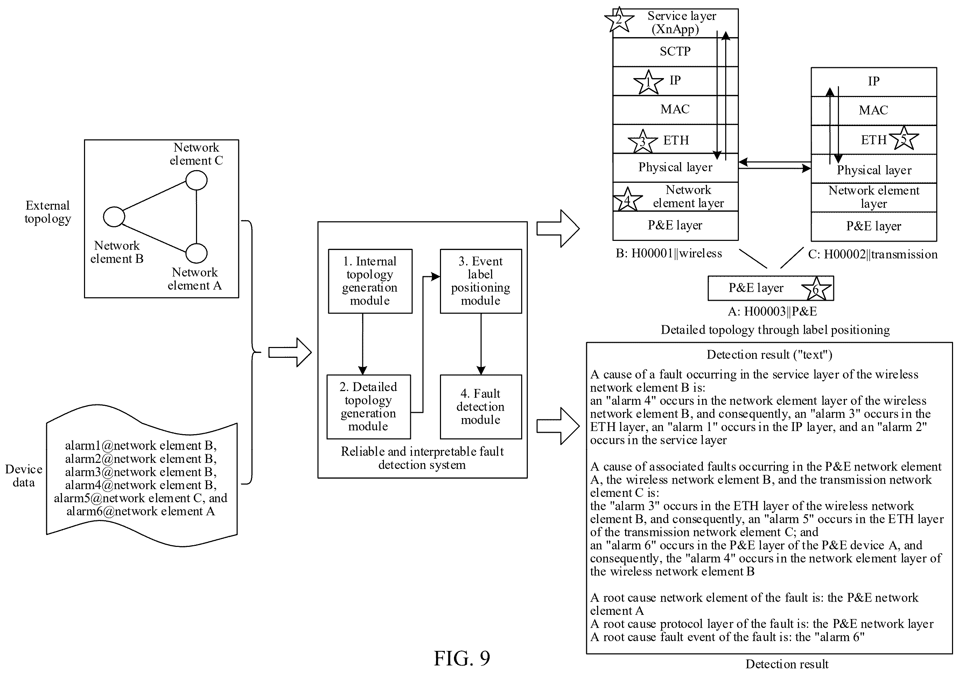

With reference to the example in FIG. 1, according to some embodiments of this application, FIG. 9 shows a diagram of a structure of still another reliable and interpretable fault detection system by using an external topology, device data, and a protocol stack information base as an input of the fault detection system. As shown in FIG. 9, the fault detection system includes an internal topology generation module, a detailed topology generation module, an event label positioning module, and a fault detection module. The input of the fault detection system is the external topology and the device data. An output of the fault detection system is a detailed topology through label positioning and a detection result. It may be understood that, the system shown in FIG. 9 is different from the system shown in FIG. 3 only in terms of the input of the system and an implementation of the internal topology generation module. The detailed topology generation module, the event label positioning module, the fault detection module, and the output of the system in the system shown in FIG. 9 are the same as those in the system shown in FIG. 3. Therefore, the following describes only the input of the system and an implementation process of the internal topology generation module in FIG. 9.

In some embodiments, for the external topology and the device data that are input into the system in FIG. 9, refer to related descriptions of the external topology and the device data in FIG. 3. Details are not described herein again.

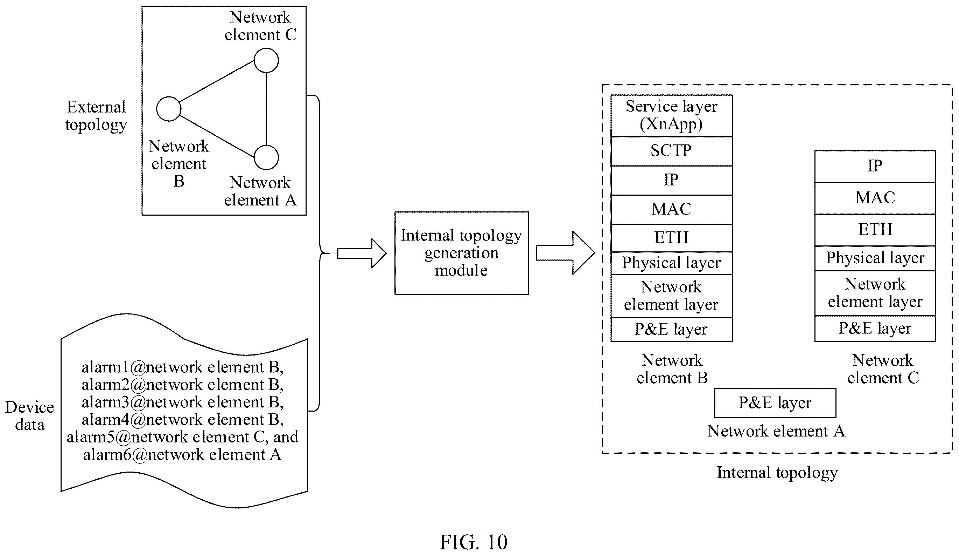

In some embodiments, as shown in FIG. 9 and FIG. 10, after the fault detection system inputs the external topology and device data into the internal topology generation module, the internal topology generation module may input the external topology and the device data into an internal topology generation model (for example, DL) in the internal topology generation module. Faulty target protocol stacks corresponding to fault events in a P&E network element A, a wireless network element B, and a transmission network element C, a plurality of protocol layers of the target protocol stacks, and a hierarchical structure of the plurality of protocol layers of the target protocol stacks can be determined by using the internal topology generation model. Further, internal topologies corresponding to the P&E network element A, the wireless network element B, and the transmission network element C are output. It may be understood that the internal topology generation model may be determined based on a training set including a plurality of network elements and different fault events corresponding to the plurality of network elements.

The following describes some embodiments of this application with reference to descriptions in FIG. 3 to FIG. 8 by using a wireless communication scenario as an example.

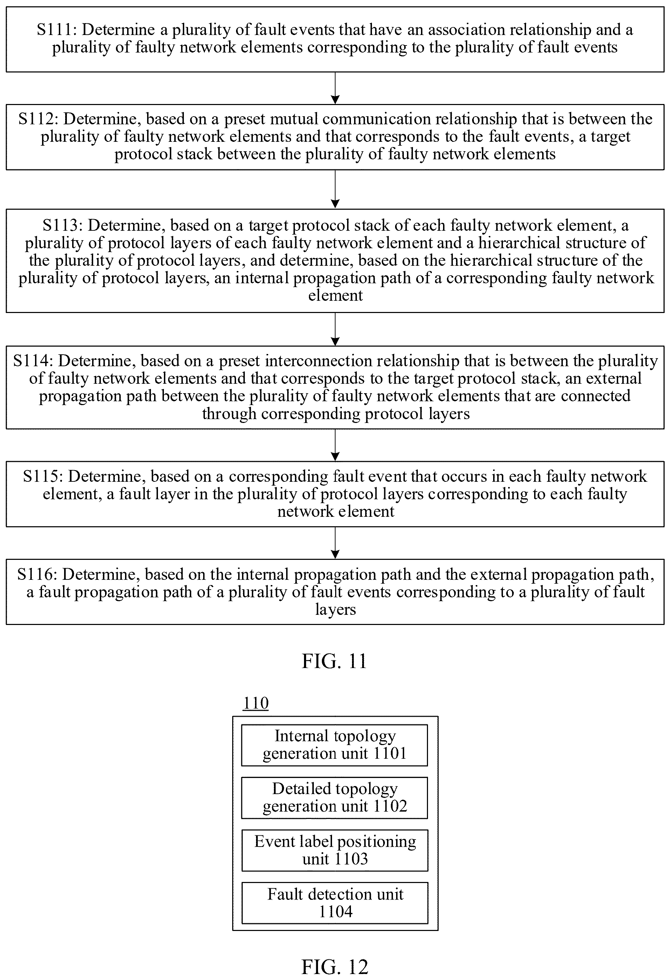

FIG. 11 is a flowchart of a fault detection method according to some embodiments of the present invention. It may be understood that, each step of the procedure shown in FIG. 11 is performed by the fault detection system shown in FIG. 3. For brevity of description, when the steps of the procedure shown in FIG. 11 are described below, execution bodies of the steps are not described repeatedly. As shown in FIG. 11, the fault detection method includes the following steps:
S111: Determine a plurality of fault events that have an association relationship and a plurality of faulty network elements corresponding to the plurality of fault events.

In some embodiments, when detecting that a plurality of fault events occur in a wireless communication service system, the fault detection system determines whether the plurality of fault events have an association relationship. For example, when a time difference between a plurality of fault occurrence time points corresponding to the plurality of fault events satisfies a preset time difference threshold, it may be determined that the plurality of fault occurrence time points satisfy a preset time association relationship. Further, it is determined that the plurality of fault events have an association relationship. For another example, when the plurality of faulty network elements corresponding to the plurality of fault events satisfy a preset network element association relationship, it may be determined that the plurality of fault events have an association relationship. Alternatively, for example, when a plurality of event types corresponding to the plurality of fault events satisfy a preset type association relationship, it may be determined that the plurality of fault events have an association relationship, and the like.

In some embodiments, after that the plurality of fault events have the association relationship is determined, the fault detection system determines fault information of the plurality of fault events and the plurality of faulty network elements corresponding to the plurality of fault events, for example, the fault information shown in FIG. 1. Then, the fault detection system determines, based on the determined fault information, an external topology, device data, and a protocol stack information base. For example, the external topology shown in FIG. 3 includes three vertexes: the P&E network element A, the wireless network element B, and the transmission network element C that are faulty network elements, and three edges that carry a plurality of protocol stacks for mutual communication between the P&E network element A, the wireless network element B, and the transmission network element C. The device data includes fault event information of fault events that occur corresponding to the P&E network element A, the wireless network element B, and the transmission network element C. The protocol stack information base includes a plurality of protocol layers corresponding to the plurality of protocol stacks between the P&E network element A, the wireless network element B, and the transmission network element C, and a hierarchical structure of the plurality of protocol layers.

In some other embodiments, step S111 may alternatively be performed by a wireless communication service system. For example, after that a plurality of fault events occur inside the system are detected and that the plurality of fault events have an association relationship is determined, the service system determines a plurality of faulty network elements corresponding to the plurality of fault events. Then, the service system sends, to the fault detection system, fault information of the plurality of fault events and the plurality of faulty network elements corresponding to the plurality of fault events. For example, the service system sends the fault information shown in FIG. 1 to the fault detection system.

S112: Determine, based on a preset mutual communication relationship that is between the plurality of faulty network elements and that corresponds to the fault events, a target protocol stack between the plurality of faulty network elements.

In some embodiments, the fault detection system inputs the external topology, the device data, and the protocol stack information base into an internal topology generation module. The fault detection system determines, by using the internal topology generation module based on the preset mutual communication relationship that is between the plurality of faulty network elements and that corresponds to the fault events, the target protocol stack between the plurality of faulty network elements. For example, as shown in FIG. 4A, based on fault event information of a fault event that occurs corresponding to the wireless network element B and fault event information of a fault event that occurs corresponding to the transmission network element C, the internal topology generation module may perform processing and analysis such as word segmentation, TF-IDF, and LR by using a classification model, to determine that a faulty target protocol stack between the wireless network element B and the transmission network element C is an Xn protocol stack of an Xn interface type.

S113: Determine, based on a target protocol stack of each faulty network element, a plurality of protocol layers of each faulty network element and a hierarchical structure of the plurality of protocol layers, and determine, based on the hierarchical structure of the plurality of protocol layers, an internal propagation path of a corresponding faulty network element.

In some embodiments, the fault detection system determines, by using the internal topology generation module based on the target protocol stack of each faulty network element, the plurality of protocol layers of each faulty network element and the hierarchical structure of the plurality of protocol layers, and determines, based on the hierarchical structure of the plurality of protocol layers, the internal propagation path of the corresponding faulty network element. For example, as shown in FIG. 4B, target protocol stacks of the wireless network element B include: an Xn protocol stack, a P&E protocol stack, and a service protocol stack. In this case, the internal topology generation module may obtain, from the protocol stack information base, the Xn protocol stack, the P&E protocol stack, and the service protocol stack that correspond to the wireless network element B and that include a plurality of protocol layers: a P&E layer, a network element layer, a physical layer, an ETH layer, a MAC layer, an IP layer, an SCTP layer, and a service layer from bottom to top; determines, based on the plurality of protocol layers included in the wireless network element B and a hierarchical structure of the plurality of protocol layers, an internal topology of the wireless network element B; and determines, based on the internal topology of the wireless network element B, an internal propagation path of the wireless network element B. Correspondingly, the internal topology generation module separately determines, based on internal topologies of the P&E network element A and the transmission network element C, internal propagation paths of the P&E network element A and the transmission network element C. For details, refer to the related descriptions of the foregoing internal topology generation module. Details are not described herein again.

S114: Determine, based on a preset interconnection relationship that is between the plurality of faulty network elements and that corresponds to the target protocol stack, an external propagation path between the plurality of faulty network elements that are connected through corresponding protocol layers.

In some embodiments, after obtaining an internal topology, the internal topology generation module inputs the internal topology into a detailed topology generation module. The fault detection system determines, by using the detail topology generation module based on the preset interconnection relationship that is between the plurality of faulty network elements and that corresponds to the target protocol stack, the external propagation path between the plurality of faulty network elements that are connected through the corresponding protocol layers. For example, as shown in FIG. 5, the detailed topology generation module may determine, based on the Xn protocol stack between the wireless network element B and the transmission network element C, that the wireless network element B is connected to the transmission network element C through physical layers corresponding to the two network elements. In other words, the physical layer in the internal topology of the wireless network element B is connected to a physical layer in an internal topology of the transmission network element C through an Xn interface. Correspondingly, the detailed topology generation module connects the P&E layer in the internal topology of the wireless network element B to a P&E layer in an internal topology of the P&E network element A, and connects a P&E layer in the internal topology of the transmission network element C to the P&E layer in the internal topology of the P&E network element A, to obtain the detailed topology of the P&E network element A, the wireless network element B, and the transmission network element C. The detailed topology generation module determines, by using the detailed topology, external propagation paths between the P&E network element A, the wireless network element B, and the transmission network element C. For details, refer to the related descriptions of the foregoing detailed topology generation module. Details are not described herein again.

S115: Determine, based on a corresponding fault event that occurs in each faulty network element, a fault layer in the plurality of protocol layers corresponding to each faulty network element.

In some embodiments, after obtaining the detailed topology, the detailed topology generation module inputs the detailed topology into an event label positioning module. The fault detection system determines, by using the event label positioning module based on the corresponding fault event that occurs in each faulty network element, the fault layer in the plurality of protocol layers corresponding to each faulty network element. For example, as shown in FIG. 6, the event label positioning module performs corresponding label positioning on the fault events that occur in the P&E network element A, the wireless network element B, and the transmission network element C, and then inputs the fault events through label positioning into the text classifier, to determine fault layers in the P&E network element A, the wireless network element B, and the transmission network element C, and performs label positioning on the fault layers based on labels of the corresponding fault events. In this way, a detailed topology through label positioning shown in FIG. 7 is obtained. For details, refer to the related descriptions of the foregoing event label positioning module. Details are not described herein again.

S116: Determine, based on the internal propagation path and the external propagation path, a fault propagation path of a plurality of fault events corresponding to a plurality of fault layers.

In some embodiments, after obtaining the detailed topology through label positioning, the event label positioning module inputs the detailed topology through label positioning into a fault detection module. The fault detection system inputs, by using the fault detection module, the detailed topology through label positioning into a generative large language model. The generative large language model determines, based on the internal propagation path and the external propagation path that are in the detailed topology through label positioning, the fault propagation path of the plurality of fault events corresponding to the plurality of fault layers, and outputs a detection result. For example, as shown in FIG. 8, the detection result may include: a cause of a fault that occurs in the service layer of the wireless network element B, a cause of associated faults that occur in the P&E network element A, the wireless network element B, and the transmission network element C, a root cause network element, a root cause protocol layer, and a root cause fault event. For details, refer to the related descriptions of the foregoing fault detection module. Details are not described herein again.

In this way, the operations and maintenance personnel may sequentially perform overhauling and maintenance based on a fault propagation path of a plurality of fault events, so that efficiency of overhauling and maintenance is ensured.

FIG. 12 is a diagram of a structure of a fault detection apparatus 10 according to some embodiments of the present invention. As shown in FIG. 12, the fault detection apparatus 110 includes an internal topology generation unit 1101, a detailed topology generation unit 1102, an event label positioning unit 1103, and a fault detection unit 1104.

In some embodiments, the internal topology generation unit 1101 is configured to determine an internal topology and an internal propagation path of each faulty network element corresponding to a corresponding fault event. For details, refer to the foregoing steps S112 and S113 and the related descriptions of the internal topology generation module, and details are not described herein again.

In some embodiments, the detailed topology generation unit 1102 is configured to determine a detailed topology and an external propagation path of a plurality of faulty network elements corresponding to corresponding fault events. For details, refer to the foregoing step S114 and the related descriptions of the detailed topology generation module, and details are not described herein again.

In some embodiments, the event label positioning unit 1103 is configured to: determine, based on the fault event that occurs in each faulty network element, a fault layer in a plurality of protocol layers corresponding to each faulty network element, and perform label positioning based on a fault event corresponding to the fault layer, to obtain a detailed topology through label positioning. For details, refer to the foregoing step S115 and the related descriptions of the event label positioning module, and details are not described herein again.

In some embodiments, the fault detection unit 1104 is configured to: determine, based on the internal propagation path and the external propagation path in the detailed topology through label positioning, a fault propagation path of a plurality of fault events corresponding to a plurality of fault layers, and output a detection result. For details, refer to the foregoing step S116 and the related descriptions of the fault detection module, and details are not described herein again.

In some embodiments, an embodiment of this application further provides a computer-readable medium. The computer-readable medium stores program code. When the computer program code is run on a computer, the computer is enabled to perform the method in the foregoing aspect.

In some embodiments, an embodiment of this application further provides a computer program product. The computer program product includes computer program code. When the computer program code is run on a computer, the computer is enabled to perform the method in the foregoing aspect.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in the device embodiments of the present invention are logic units/modules. Physically, one logic unit/module may be one physical unit/module, may be a part of one physical unit/module, or may be implemented by a combination of a plurality of physical units/modules. Physical implementations of these logic units/modules are not the most important, and a combination of functions implemented by these logic units/modules is a key to resolving technical problems proposed in the present invention. In addition, to highlight an innovative part of the present invention, a unit/module that is not closely related to resolving the technical problems proposed in the present invention is not introduced in the foregoing device embodiments of the present invention. This does not mean that there are no other units/modules in the foregoing device embodiments.

It should be noted that, in the examples and specification of this patent, relational terms such as first and second are merely used to distinguish one entity or operation from another, and do not necessarily require or imply any such actual relationship or order between these entities or operations. Moreover, a term "include", "comprise", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although the present invention is illustrated and described with reference to some exemplary embodiments, a person of ordinary skill in the art should understand that various modifications for the present invention in forms and details can be made without departing from the scope of the present invention.

## Claims

1. A fault detection method, comprising:
determining a plurality of fault events that have an association relationship and a plurality of faulty network elements corresponding to the plurality of fault events;
determining, based on a preset mutual communication relationship that is between the plurality of faulty network elements and that corresponds to the fault events, a target protocol stack between the plurality of faulty network elements;
determining, based on a target protocol stack of each faulty network element, a plurality of protocol layers of each faulty network element, and determining, based on a hierarchical structure of the plurality of protocol layers, an internal propagation path of a corresponding faulty network element;
determining, based on a preset interconnection relationship that is between the plurality of faulty network elements and that corresponds to the target protocol stack, an external propagation path between the plurality of faulty network elements that are connected through target protocol layers corresponding to the target protocol stack, wherein the target protocol layer used by each faulty network element for connection is a protocol layer in the plurality of protocol layers corresponding to each faulty network element;
determining, based on a corresponding fault event that occurs in each faulty network element, a fault layer in the plurality of protocol layers corresponding to each faulty network element; and
determining, based on the internal propagation path and the external propagation path, a fault propagation path of a plurality of fault events corresponding to a plurality of fault layers.

2. The method according to claim 1, wherein determining, based on the hierarchical structure of the plurality of protocol layers, the internal propagation path of the corresponding faulty network element comprises:
determining, based on the plurality of protocol layers of the faulty network element and the hierarchical structure of the plurality of protocol layers, an internal topology of the corresponding faulty network element; and
determining, based on the internal topology of the faulty network element, the internal propagation path of the faulty network element in the plurality of protocol layers of the corresponding faulty network element.

3. The method according to claim 2, wherein determining, based on the preset interconnection relationship that is between the plurality of faulty network elements and that corresponds to the target protocol stack, the external propagation path between the plurality of faulty network elements that are connected through the target protocol layers corresponding to the target protocol stack comprises:
connecting, based on the preset interconnection relationship that is between the plurality of faulty network elements and that corresponds to the target protocol stack, a plurality of internal topologies corresponding to the plurality of faulty network elements through the target protocol layers corresponding to the target protocol stack, to form a detailed topology; and
determining, based on the target protocol layers that connect the plurality of internal topologies in the detailed topology, the external propagation path between the plurality of faulty network elements.

4. The method according to claim 3, wherein determining, based on the corresponding fault event that occurs in each faulty network element, the fault layer in the plurality of protocol layers corresponding to each faulty network element comprises:
performing event labeling on each fault event;
determining, based on the corresponding fault event that occurs in each faulty network element and the event label corresponding to the fault event, the fault layer in the plurality of protocol layers corresponding to each faulty network element and a layer label of the fault layer; and
determining, based on the layer label and the event label, a correspondence between the fault layer and the fault event.

5. The method according to claim 4, wherein determining, based on the internal propagation path and the external propagation path, the fault propagation path of the plurality of fault events corresponding to the plurality of fault layers comprises:
determining, based on the internal propagation path and the external propagation path, a hierarchical propagation path of the plurality of fault layers corresponding to the plurality of faulty network elements between a plurality of protocol layers of the plurality of faulty network elements; and
determining, based on the hierarchical propagation path and the correspondence between the fault layer and the fault event, the fault propagation path of the corresponding plurality of fault events between the plurality of protocol layers of the plurality of faulty network elements.

6. The method according to any one of claims 1 to 5, wherein determining the target protocol stack between the plurality of faulty network elements comprises:
determining a preset protocol stack set for mutual communication between the plurality of faulty network elements, wherein the protocol stack set comprises a plurality of protocol stacks for the mutual communication between the plurality of faulty network elements; and
determining, from the plurality of protocol stacks based on the preset mutual communication relationship that is between the plurality of faulty network elements and that corresponds to the fault events, the corresponding target protocol stack between the plurality of faulty network elements.

7. The method according to any one of claims 1 to 5, wherein determining the plurality of fault events that have the association relationship comprises:
determining a plurality of fault occurrence time points corresponding to the plurality of fault events, and determining, corresponding to the plurality of fault occurrence time points satisfying a preset time association relationship, that the plurality of fault events have the association relationship;
determining the plurality of faulty network elements corresponding to the plurality of fault events, and determining, corresponding to the plurality of faulty network elements satisfying a preset network element association relationship, that the plurality of fault events have the association relationship; or
determining a plurality of event types corresponding to the plurality of fault events, and determining, corresponding to the plurality of event types satisfying a preset type association relationship, that the plurality of fault events have the association relationship.

8. A fault detection system, comprising:
an internal topology generation module that determines, based on a preset mutual communication relationship that is between a plurality of faulty network elements and that corresponds to fault events, a target protocol stack between the plurality of faulty network elements; determines, based on a target protocol stack of each faulty network element, a plurality of protocol layers of each faulty network element; and determines, based on a hierarchical structure of the plurality of protocol layers, an internal propagation path of a corresponding faulty network element;
a detailed topology generation module that determines, based on a preset interconnection relationship that is between the plurality of faulty network elements and that corresponds to the target protocol stack, an external propagation path between the plurality of faulty network elements that are connected through target protocol layers corresponding to the target protocol stack, wherein the target protocol layer used by each faulty network element for connection is a protocol layer in the plurality of protocol layers corresponding to each faulty network element;
an event label positioning module that determines, based on a corresponding fault event that occurs in each faulty network element, a fault layer in the plurality of protocol layers corresponding to each faulty network element; and
a fault detection module that determines, based on the internal propagation path and the external propagation path, a fault propagation path of a plurality of fault events corresponding to a plurality of fault layers.

9. The system according to claim 8, wherein that the internal topology generation module determines, based on the hierarchical structure of the plurality of protocol layers, the internal propagation path of the corresponding faulty network element comprises:
the internal topology generation module determines, based on the plurality of protocol layers of the faulty network element and the hierarchical structure of the plurality of protocol layers, an internal topology of the corresponding faulty network element; and determines, based on the internal topology of the faulty network element, the internal propagation path of the faulty network element in the plurality of protocol layers of the corresponding faulty network element.

10. The system according to claim 9, wherein that the internal topology generation module determines, based on the preset interconnection relationship that is between the plurality of faulty network elements and that corresponds to the target protocol stack, the external propagation path between the plurality of faulty network elements that are connected through the target protocol layers corresponding to the target protocol stack comprises:
the detailed topology generation module connects, based on the preset interconnection relationship that is between the plurality of faulty network elements and that corresponds to the target protocol stack, a plurality of internal topologies corresponding to the plurality of faulty network elements through the target protocol layers corresponding to the target protocol stack, to form a detailed topology; and determines, based on the target protocol layers that connect the plurality of internal topologies in the detailed topology, the external propagation path between the plurality of faulty network elements.

11. The system according to claim 10, wherein that the event label positioning module determines, based on the corresponding fault event that occurs in each faulty network element, the fault layer in the plurality of protocol layers corresponding to each faulty network element comprises:
the event label positioning module performs event labeling on each fault event; and determines, based on the corresponding fault event that occurs in each faulty network element and the event label corresponding to the fault event, the fault layer in the plurality of protocol layers corresponding to each faulty network element and a layer label of the fault layer; and
determines, based on the layer label and the event label, a correspondence between the fault layer and the fault event.

12. The system according to claim 11, wherein that the fault detection module determines, based on the internal propagation path and the external propagation path, the fault propagation path of the plurality of fault events corresponding to the plurality of fault layers comprises:
the fault detection module determines, based on the internal propagation path and the external propagation path, a hierarchical propagation path of the plurality of fault layers corresponding to the plurality of faulty network elements between a plurality of protocol layers of the plurality of faulty network elements; and determines, based on the hierarchical propagation path and the correspondence between the fault layer and the fault event, the fault propagation path of the corresponding plurality of fault events between the plurality of protocol layers of the plurality of faulty network elements.

13. The system according to any one of claims 8 to 12, wherein that the internal topology generation module determines the target protocol stack between the plurality of faulty network elements comprises:
the internal topology generation module determines a preset protocol stack set for mutual communication between the plurality of faulty network elements, wherein the protocol stack set comprises a plurality of protocol stacks for the mutual communication between the plurality of faulty network elements; and determines, from the plurality of protocol stacks based on the preset mutual communication relationship that is between the plurality of faulty network elements and that corresponds to the fault events, the corresponding target protocol stack between the plurality of faulty network elements.

14. A computer-readable storage medium, wherein the readable storage medium stores instructions; and when the instructions are executed on an apparatus, the apparatus is enabled to implement the method according to any one of claims 1 to 7.
